# FASCICULE DE BREVET EUROPEEN

(11) **EP 3 533 709 B1**
(45) Date de publication et mention de la délivrance du brevet: **18.08.2021**
(21) Numéro de dépôt: 19153466.8
(22) Date de dépôt: 24.01.2019
(51) Int. Cl.: B64C 27/35

(54) **BUTÉE LAMIFIÉE, ROTOR MUNI D'UNE TELLE BUTÉE, ET AÉRONEF**
LAMINIERTER ANSCHLAG, MIT EINEM SOLCHEN ANSCHLAG AUSGESTATTETER ROTOR, UND LUFTFAHRZEUG
LAMINATED ABUTMENT, ROTOR PROVIDED WITH SUCH AN ABUTMENT, AND AIRCRAFT

(30) Priorité: 28.02.2018 FR 1870213
(43) Date de publication de la demande: 04.09.2019
(73) Titulaire: Airbus Helicopters, 13725 Marignane Cedex (FR)
(72) Inventeur: BERTHALON, Sylvain, 13880 VELAUX (FR); MASSAL, Fabien, 13119 SAINT SAVOURNIN (FR)
(74) Mandataire: GPI & Associés

(56) Documents cités:
- EP-A1- 0 493 145
- EP-A1- 2 154 065
- EP-A1- 2 902 318
- EP-A1- 3 081 483
- GB-A- 2 072 114
- US-A- 3 556 673
- US-A- 5 588 801
- US-A1- 2015 336 662

## Description

La présente invention concerne une butée lamifiée ainsi qu'un rotor et un aéronef munis d'une telle butée. Plus particulièrement, l'invention concerne un aéronef à voilure tournante.

L'invention se situe donc dans le domaine technique des rotors de giravion. Plus spécifiquement, l'invention se situe dans le domaine des butées lamifiées équipant de tels rotors pour articuler un ensemble sustentateur à un moyeu d'un rotor.

En effet, un giravion comporte usuellement au moins un rotor de sustentation. Ce rotor de sustentation participe au moins à la sustentation voire à la propulsion de ce giravion. Un rotor de sustentation peut comprendre un support dénommé « moyeu » mis en rotation par un mât rotor. Le moyeu porte alors au moins deux ensembles sustentateurs. Par suite, chaque ensemble sustentateur est muni d'une pale formant un élément sustentateur, cette pale pouvant être articulée au moyeu au moins par un organe de retenue et de mobilité et éventuellement un manchon.

Selon une variante, une pale peut donc notamment comprendre un élément sustentateur attaché à un manchon, ce manchon étant fixé à un organe de retenue et de mobilité. Selon une autre variante, une pale est directement attachée à un organe de retenue et de mobilité. Indépendamment de la variante, l'organe de retenue et de mobilité est lui-même fixé au moyeu.

Un tel organe de retenue et de mobilité peut inclure une articulation dénommée « butée lamifiée » voire « butée sphérique ». Chaque butée lamifiée peut avoir une première armature et une deuxième armature. La première armature comporte au moins une ouverture qui s'étend selon un premier axe de fixation vertical pour être attachée à un moyeu par une broche ou un ensemble vis/écrou, et la deuxième armature comporte au moins une ouverture qui s'étend selon un deuxième axe de fixation vertical pour être attachée à une pale ou à un manchon de pale par une broche ou un ensemble vis/écrou. Chaque deuxième axe de fixation est plus près de l'axe de rotation du rotor que chaque premier axe de fixation.

De plus, la butée lamifiée comprend par exemple un ensemble élastomérique qui est adhérisé à la première armature et à la deuxième armature. Cet ensemble élastomérique est constitué d'un empilement alterné de couches de matière souple, par exemple d'élastomère, et de coupelles rigides par exemple en métal. La butée lamifiée comporte successivement, selon un sens allant vers le moyeu, la première armature puis l'ensemble élastomérique et enfin la deuxième armature.

Le document FR 2497173 présente une butée lamifiée comprenant un empilement de couches de matière souple et d'un matériau rigide.

Selon un autre aspect, un moyeu peut comprendre au moins un plateau délimitant des alvéoles. Les butées lamifiées sont alors agencées dans les alvéoles, la première armature étant solidarisée au plateau. La pale ou le manchon selon la variante comporte alors une section disposée verticalement de part et d'autre de la butée lamifiée et d'une partie du moyeu.

Bien qu'efficace une telle architecture peut engendrer un moyeu ayant des dimensions relativement importantes et par suite lourd. De plus, il faut éviter une interférence entre le manchon ou la pale, selon la variante, et la partie du moyeu fixée à la première armature.

Le document US 9415866 décrit un rotor comprenant un moyeu à deux plateaux et des butées lamifiées. Ces deux plateaux incluent un plateau inférieur et un plateau supérieur, le plateau supérieur étant situé au dessus du plateau inférieur. Chaque plateau présente un bras par pale. Dès lors, chaque butée lamifiée comporte une première armature et une deuxième armature reliées par un empilement alterné de couches de matière souple et de coupelles rigides. La première armature d'une butée lamifiée s'étend verticalement pour être fixée directement à un bras du plateau inférieur et à un bras du plateau supérieur. La deuxième armature d'une butée lamifiée s'étend horizontalement pour être fixée à une fourche afin de porter une pale.

Le document US 2015/0307187 décrit un moyeu d'un rotor basculant, le moyeu étant muni d'une armature portant trois pales.

Le document EP 1199483 n'appartient au domaine de l'invention en ayant trait à une barre antiroulis d'un véhicule roulant.

De même, le document FR 2889687 décrit une barre munie d'une articulation à rotule.

Le document US 2015/336662 décrit une butée lamifiée usuelle agencée sur une tête de rotor ayant une pièce centrale et une unité de transmission de couple en étoile.

Le document US 3556673 décrit un ensemble ayant deux organes élastomériques et deux armatures.

Le document GB 2072114 décrit une butée ayant une armature vissée.

Le document EP 2154065 décrit une butée ayant une armature fixée à une pale et un armature attachée par un boulon et un écrou à un bras.

Les documents US 5588801, EP 2902318, EP 3081483 et EP 0493145 sont aussi connus.

La présente invention a pour objet d'obtenir une butée lamifiée innovante susceptible d'optimiser l'encombrement d'un moyeu.

Selon l'invention, une butée lamifiée est munie d'une première armature et d'une deuxième armature, la butée lamifiée comprenant un organe élastomérique reliant une première face de la première armature à une deuxième face de la deuxième armature en s'étendant selon un sens d'empilement, ledit organe élastomérique comprenant un empilement de couches principales et de couches secondaires, chaque couche principale comportant au moins un matériau élastique et chaque couche secondaire comportant au moins une coupelle en un matériau rigide,

la première armature est une pièce monobloc d'un seul tenant et comprend selon le sens d'empilement un pied muni de la première face puis un arbre de liaison suivi d'une attache destinée à être attachée à un moyeu, la deuxième armature comportant selon un sens d'extension contraire au sens d'empilement un premier tronçon muni de la deuxième face puis un deuxième tronçon qui est destiné à être attachée à un ensemble sustentateur, la deuxième face étant perforée par un orifice de passage qui est traversé par la première armature, chaque couche principale et chaque couche secondaire présentant une ouverture traversée par la première armature, le pied étant agencé dans un volume délimité par la deuxième armature et l'attache étant agencée en dehors dudit volume, et au moins une coupelle entourant une ouverture ne pouvant pas être traversée par l'attache, cette coupelle comportant au moins deux portions distinctes.

Contrairement à une butée lamifiée usuelle, la première armature traverse l'organe élastomérique et la deuxième armature afin de pouvoir être solidarisée à un mât rotor. Cet agencement innovant peut permettre l'obtention d'un moyeu ne nécessitant pas une alvéole. Par exemple, ce moyeu peut prendre la forme d'une simple chape à deux épaulements.

En outre, une telle butée lamifiée peut permettre d'éviter l'usage d'un manchon ou d'une pale à disposer de part et d'autre d'un bras d'un moyeu.

Dès lors, la butée lamifiée peut permettre l'obtention d'un moyeu simple ayant un encombrement réduit.

La butée lamifiée peut comporter une ou plusieurs des caractéristiques qui suivent.

L'organe élastomérique peut avoir la forme d'un tronçon de de sphère. Ce tronçon de sphère a une forme correspondant à l'intersection d'une sphère et d'un cône pour laquelle une partie centrale a été retirée pour obtenir lesdites ouvertures.

L'organe élastomérique peut avoir une forme annulaire qui s'étend radialement d'un bord externe tronconique vers un bord interne tronconique.

Au repos, l'organe élastomérique peut avoir une symétrie de révolution autour d'un axe de pas d'une pale fixée à cette butée lamifiée.

Selon un aspect, l'organe élastomérique peut être effilé selon le sens d'extension.

Selon un aspect, l'attache peut comporter au moins un premier orifice de fixation destiné à être traversé par une première tige selon un premier axe de fixation, ladite deuxième armature comprenant au moins un deuxième orifice de fixation destiné à être traversé par une deuxième tige selon un deuxième axe de fixation, le premier axe de fixation étant configuré pour être plus près d'un axe de rotation d'un moyeu relié à l'attache que le deuxième axe de fixation.

La première tige peut prendre la forme d'une broche, d'une tige filetée, ou encore d'une vis d'un boulon par exemple. De même, la deuxième tige peut prendre la forme d'une broche, d'une tige filetée, ou encore d'une vis d'un boulon par exemple

Cette disposition va à l'encontre des butées usuelles, notamment du type du document FR 2497173.

Selon un aspect, l'arbre de liaison peut être effilé selon ledit sens d'empilement.

Par exemple, un arbre de liaison tronconique peut être utilisé.

Selon un aspect, l'arbre de liaison peut n'être en contact ni avec l'organe élastomérique ni avec la deuxième armature.

L'arbre de liaison n'entrave alors pas un mouvement de la deuxième armature par rapport à la première armature, en permanence ou au moins au repos.

L'arbre de liaison peut selon un aspect comporter ou porter au moins un organe de butée configuré pour limiter un mouvement de la deuxième armature par rapport à la première armature par interférence de forme.

Selon un aspect, la deuxième armature comporte au moins un socle, le socle portant un patin de butée.

Par exemple, le premier tronçon porte deux socles pour porter un patin de butée basse et un patin de butée haute.

L'attache peut avoir des dimensions relativement importantes pour supporter les efforts subis en fonctionnement. Par contre, l'organe élastomérique peut avoir des dimensions minimisées pour limiter son encombrement. Ce dimensionnement permet d'obtenir une attache et un organe élastomérique qui sont tous deux optimisés au regard de leurs fonctions.

Par contre, un tel dimensionnement ne parait pas possible puisqu'au moins une coupelle de l'organe élastomérique ne peut a priori pas être glissée autour de la première armature.

Néanmoins, l'utilisation de coupelles présentant plusieurs portions au lieu de coupelles monoblocs permet de résoudre ce problème.

Par exemple, l'attache peut s'étendre verticalement sur une hauteur maximale perpendiculairement au sens d'empilement, et ladite attache peut s'étendre latéralement sur une largeur perpendiculairement au sens d'empilement, ladite ouverture d'une coupelle ne pouvant pas être traversée par l'attache étant contenue dans un disque présentant un diamètre, ledit diamètre du disque étant inférieur à ladite hauteur, ledit diamètre du disque étant inférieur à ladite largeur.

Les au moins deux portions d'une coupelle peuvent être positionnées indépendamment l'une de l'autre.

Alternativement, les au moins deux portions d'une coupelle peuvent être positionnées et maintenues l'une à l'autre.

Par exemple, les au moins deux portions peuvent être emboitées l'une dans l'autre.

Un montage en queue d'aronde peut être utilisé par exemple afin de réaliser un tel emboitement.

Alternativement ou de manière complémentaire à un emboitement, les au moins deux portions peuvent comporter respectivement au moins deux oreilles, lesdites deux oreilles étant reliées par un lien. Un tel lien peut comprendre un jonc, une agrafe, une épingle...

L'expression « respectivement au moins deux oreilles » signifie que chaque portion comporte au moins une oreille qui est reliée à une autre oreille d'une autre portion par un lien. Selon un exemple, chaque portion comporte une oreille. Selon un autre exemple, chaque portion comporte deux oreilles reliées à deux autres oreilles d'au moins une autre portion.

Selon un autre aspect, l'orifice de passage peut présenter une surface pouvant être traversée par le pied ainsi que par l'arbre de liaison et l'attache.

Ainsi, la deuxième armature peut être glissée autour de la première armature pour être adhérisée à l'organe élastomérique.

Selon un aspect, l'attache et la première face peuvent être en saillie de l'arbre de liaison au moins selon une direction perpendiculaire au sens d'empilement.

Par ailleurs, l'invention peut aussi viser un rotor muni d'un moyeu et de plusieurs ensembles sustentateurs, chaque ensemble sustentateur étant articulé au moyeu par au moins une butée lamifiée selon cette invention.

Par exemple, le moyeu peut inclure au moins deux épaulements, lesdits au moins deux épaulements étant solidaires d'un mât rotor, au moins une dite butée lamifiée étant agencée entre lesdits au moins deux épaulements et étant attachée à ces au moins deux épaulements.

Selon un exemple, le moyeu comporte deux anneaux portés par le mât rotor, chaque butée lamifiée étant agencée entre ces deux anneaux

Par ailleurs, l'invention peut aussi viser un aéronef muni d'un rotor qui comprend une butée lamifiée selon cette invention.

Par ailleurs, l'invention vise un procédé de fabrication d'une butée lamifiée selon la revendication 16.

A l'issue de ces opérations, la butée lamifiée est démoulée.

L'invention et ses avantages apparaîtront avec plus de détails dans le cadre de la description qui suit avec des exemples donnés à titre illustratif en référence aux figures annexées qui représentent :
- la figure 1, un schéma montrant une butée lamifiée en trois dimensions selon l'invention,
- la figure 2, un schéma montrant la butée lamifiée coupée partiellement afin de distinguer les diverses couches de l'organe élastomérique,
- la figure 3, un schéma en deux dimensions d'une coupe d'une butée lamifiée,
- les figures 4 à 6, des schémas présentant des coupelles en au moins deux portions,
- les figures 7 et 8, des schémas illustrant un rotor selon l'invention, et
- la figure 9, un schéma d'un aéronef muni d'un rotor selon l'invention.

Les éléments présents dans plusieurs figures distinctes sont affectés d'une seule et même référence.

Trois directions X, Y et Z orthogonales les unes par rapport aux autres sont représentées sur certaines figures.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite verticale. L'expression « verticale » est relative à toute direction parallèle à la troisième direction Z.

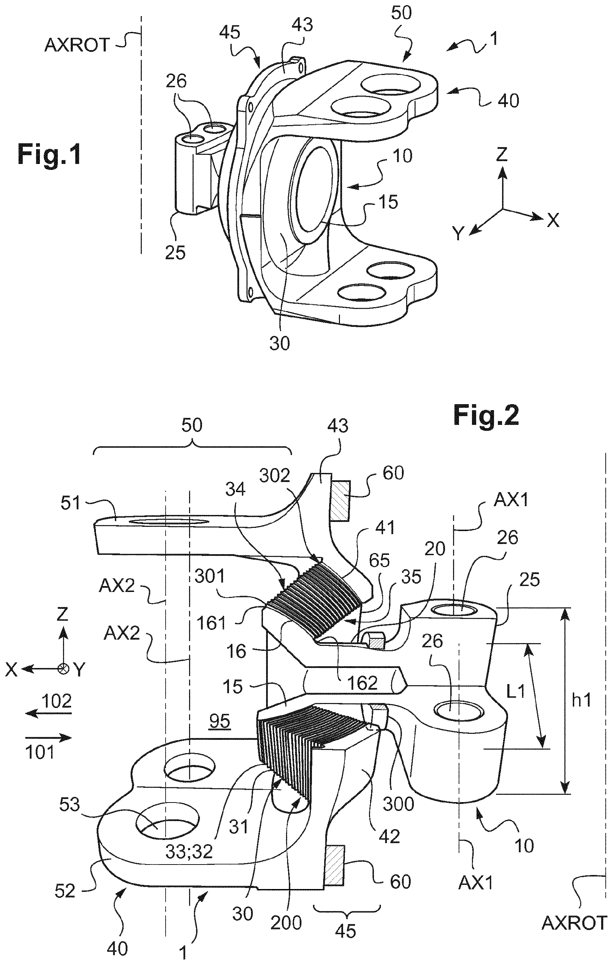

La figure 1 présente une butée lamifiée 1 selon l'invention en trois dimensions. La figure 2 présente une vue en trois dimensions coupée par commodité pour montrer les divers organes de cette butée lamifiée 1.

En référence à la figure 2, la butée lamifiée 1 présente trois sous-ensembles, à savoir une première armature 10 parfois qualifiée de petite armature ainsi qu'une deuxième armature 40 parfois qualifiée de grande armature et un organe élastomérique 30. L'organe élastomérique s'étend selon un sens d'empilement 101 pour relier une première face 16 de la première armature 10 à une deuxième face 41 de la deuxième armature 40 en conférant au moins trois degrés de liberté en rotation à la deuxième armature 40 par rapport à la première armature 10, par exemple autour d'un axe de pas, d'un axe de battement et d'un axe de traînée.

Plus précisément, la première armature 10 s'étend selon le sens d'empilement 101 d'un pied 15 jusqu'à une attache 25 en passant par un arbre de liaison 20. Le sens d'empilement 101 est dirigé vers un axe de rotation AXROT de la butée lamifiée 1 en fonctionnement, et peut s'étendre selon l'axe de pas. Dès lors, le pied 15 est fixé à une première extrémité de l'arbre de liaison 20, une deuxième extrémité de l'arbre de liaison 20 étant fixée à l'attache 25. La première armature 10 est une pièce monobloc d'un seul tenant.

Le pied 15 peut présenter une symétrie de révolution autour du sens d'empilement 101. Le pied 15 peut ainsi avoir une forme annulaire. En outre, le pied 15 comporte la première face 16 à fixer à l'organe élastomérique 30. La première face 16 peut être convexe pour un observateur regardant le pied 15 selon un sens d'extension 102 contraire au sens d'empilement. La première face 16 peut donc présenter des sections qui diminuent selon le sens d'empilement 101 La première face 16 peut avoir une forme de calotte sphérique percée en son centre. La première face peut s'étendre selon le sens d'empilement 101 d'une première section 161 formant une extrémité de la première armature 10 jusqu'à une deuxième section 162 prolongée par l'arbre de liaison 20. La première section 161 peut prendre la forme d'un cercle ayant un diamètre dit « diamètre d'extrémité D2 » par commodité.

L'arbre de liaison 20 s'étend alors vers l'attache 25 en partant de la deuxième section 162. Cet arbre de liaison 20 peut être un arbre creux. L'arbre de liaison 20 peut être effilé selon le sens d'empilement 101. Par exemple, l'arbre de liaison 20 est sensiblement tronconique.

L'attache 25 prolonge alors l'arbre de liaison 20 pour être attachée à un moyeu. Le terme moyeu désigne une pièce solidaire d'un mât rotor voire faisant partie intégrante du mât rotor, ce mât rotor et ce moyeu effectuant une rotation conjointe autour de l'axe de rotation AXROT. Cette attache 25 est traversée de part en part par au moins un premier orifice de fixation 26 destiné à être traversé par une deuxième tige. Chaque premier orifice de fixation 26 s'étend selon un premier axe de fixation AX1. Par exemple, le ou les orifices de fixation s'étendent verticalement, à savoir sensiblement parallèlement à l'axe de rotation AXROT du rotor muni de la butée lamifiée 1. Selon une variante non représentée, les orifices de fixation s'étendent tangentiellement à un cercle centré sur l'axe de rotation AXROT. Selon l'exemple représenté, l'attache 25 comporte deux premiers orifices de fixation 26 verticaux.

Par ailleurs, l'attache 25 peut être contenue dans un pavé présentant une hauteur H1 selon une direction perpendiculaire au sens d'empilement 101, à savoir verticalement. Le terme hauteur H1 désigne la plus grande hauteur de l'attache 25. De plus, l'attache 25 s'étend latéralement sur une largeur L1 perpendiculairement au sens d'empilement 101, à savoir selon une direction horizontale. Le terme largeur désigne la plus grande largeur de l'attache 25. Par exemple, l'attache 25 a sensiblement la forme d'un pavé.

Selon un autre aspect, l'attache 25 et la première face 16 sont en saillie de l'arbre de liaison 20, et donc dépasse de l'arbre de liaison 20, au moins selon une direction perpendiculaire au sens d'empilement 101, par exemple au moins selon la verticale. Ainsi la hauteur H1 de l'attache et le diamètre d'extrémité D2 de la première face 16 peuvent par exemple être supérieurs à une hauteur maximale de l'arbre de liaison 20. L'attache 25 et le pied peuvent s'étendre chacun verticalement de part et d'autre de l'arbre de liaison 20. La hauteur H1 et la largeur L1 de l'attache peuvent être supérieures au diamètre d'extrémité D2.

Par ailleurs, l'organe élastomérique 30 comprend un empilement de couches principales 31 et de couches secondaires 32. Chaque couche principale 31 comporte au moins un matériau élastique, par exemple un matériau du groupe des élastomères. Ainsi, chaque couche principale 31 peut par exemple être une couche d'élastomère. A l'inverse, chaque couche secondaire 32 comporte une ou plusieurs coupelles 33 en un matériau rigide, par exemple en métal ou en matière plastique ou en matériaux composites.

Les termes « rigide » et « élastique » signifient que chaque coupelle est plus rigide que chaque couche principale selon au moins un axe géométrique.

A l'exception des extrémités de l'organe élastomérique 30, chaque couche secondaire 32 est par exemple disposée entre deux couches principales 31, et chaque couche principale 31 est disposée entre deux couches secondaires 32. En outre, une couche principale adhère par exemple à la première face 16 et une autre couche principale adhère à la deuxième face 41.

Par ailleurs, chaque couche principale 31 et chaque couche secondaire 32 comprennent des ouvertures 70 respectives, chaque ouverture 70 traversant de part en part une couche principale 31 ou une couche secondaire 32 selon le sens d'empilement 101. Chaque couche principale 31 et chaque couche secondaire 32 peuvent avoir une forme annulaire voire peuvent avoir une symétrie de révolution. Par exemple, chaque ouverture 70 est disposée au centre de la couche principale 31 ou de la couche secondaire 32 associée.

Ainsi, l'organe élastomérique 30 peut avoir une forme annulaire. La première armature 10 peut en outre traverser de part en part l'organe élastomérique selon le sens d'empilement, une partie du pied 15 étant située d'un côté de l'organe élastomérique et l'attache 25 étant située de l'autre côté de l'organe élastomérique 30 selon le sens d'empilement 101.

L'organe élastomérique 30 peut être effilé selon le sens d'extension 102, contrairement à la première face 16 et à l'arbre de liaison 20 qui peuvent être effilés selon le sens d'empilement 101.

Par exemple, l'organe élastomérique 30 s'étend selon son épaisseur d'un bord interne 35 jusqu'à un bord externe 34. Eventuellement, l'organe élastomérique 30 s'étend radialement d'un bord interne 35 qui est entouré au moins partiellement par un bord externe 34. Le bord interne 35 et le bord externe 34 peuvent avoir chacun une forme tronconique.

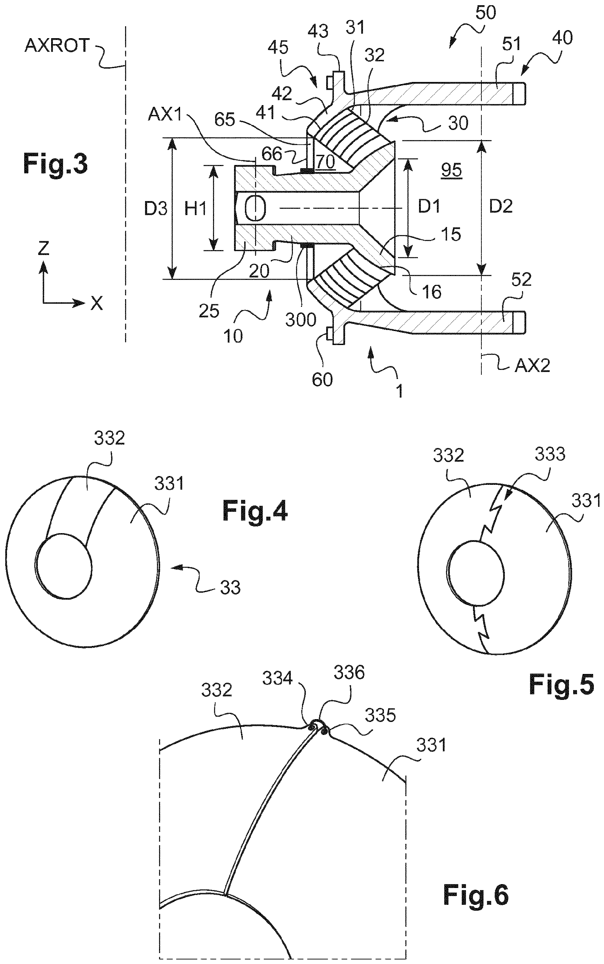

Au moins une coupelle 33 présente une ouverture 70 ne pouvant pas être traversée par l'attache 25. Cette ouverture a donc au moins une dimension inférieure à une dimension de l'attache. Par exemple et en référence à la figure 3, l'ouverture 70 d'une telle coupelle peut prendre la forme d'un disque ayant un diamètre D1 inférieur à une hauteur H1 de l'attache 25 et/ou à une largeur L1 de l'attache 25. Une telle coupelle peut avoir une dimension inférieure au diamètre d'extrémité D2, et donc selon la figure 3 un diamètre D1 inférieur au diamètre d'extrémité D2.

Dès lors, l'attache 25 ne peut pas passer au travers de l'organe élastomérique 30, et plus précisément des coupelles.

En référence à la figure 4 et pour permettre la fabrication de cette butée lamifiée 1, une coupelle 33 présentant des dimensions inférieures à l'attache et ne pouvant théoriquement pas être traversée par l'attache 25 comporte au moins deux portions 331, 332 distinctes à cet effet.

Selon la figure 4, les deux portions peuvent être disposées l'une à côté de l'autre.

Selon les figures 5 et 6 les deux portions peuvent être liées l'une à l'autre. Selon la figure 5, deux portions 331, 332 sont emboitées l'une dans l'autre.

Selon la figure 6, deux portions 331, 332 peuvent comprendre respectivement deux oreilles 334, 335. Le terme oreille désigne une protubérance percée. Un lien traverse alors des orifices des oreilles.

Par ailleurs et en référence à la figure 2, la deuxième armature 40 comprend selon le sens d'extension 102 un premier tronçon 45 muni de la deuxième face 41 puis un deuxième tronçon 50. La deuxième face 41 présente un orifice de passage 65 qui est traversé par la première armature 10. La deuxième armature 40 peut être une pièce monobloc d'un seul tenant.

Le premier tronçon 45 peut comprendre une zone extrémale 42 munie de la deuxième face 41. Cette zone extrémale 42 peut présenter une symétrie de révolution autour du sens d'empilement 101. Cette zone extrémale 42 peut ainsi avoir une forme annulaire. En outre, la deuxième face 41 peut être concave pour un observateur regardant la deuxième armature selon un sens d'empilement 101. La deuxième face peut donc présenter des sections qui diminuent selon le sens d'extension 102. La deuxième face 41 peut avoir une forme de calotte sphérique percée en son centre pour présenter l'orifice de passage 65. La zone extrémale 42 peut s'étendre selon le sens d'empilement 101 d'une première tranche verticale jusqu'à une deuxième tranche 410 verticale qui forme une extrémité de la deuxième armature 15.

L'orifice de passage 65 peut être situé au niveau de la deuxième tranche ou selon l'exemple représenté dans une section comprise entre la première tranche et la deuxième tranche. L'orifice de passage 65 peut prendre la forme d'un disque ayant un diamètre dit « diamètre de passage D3 » par commodité. L'orifice de passage 65 peut présenter une surface 66 apte à être traversée par le pied 15 et/ou l'arbre de liaison 20 et/ou l'attache 25. Par exemple, le diamètre de passage D3 est supérieur à la hauteur H1 et la largeur L1 de l'attache 25 et au diamètre d'extrémité D2.

Le deuxième tronçon 50 peut comprendre par exemple une joue supérieure 51 et une joue inférieure 52 qui prolongent chacune le premier tronçon 45 pour former une chape ou un manchon. La joue supérieure 51 et la joue inférieure 52 peuvent être parallèles l'une à l'autre, voire parallèles à un plan orthogonal à chaque premier axe de fixation AX1.

La deuxième armature 40 délimite au moins partiellement un volume 95, par exemple au moins avec le deuxième tronçon et le cas échéant entre la joue supérieure 51 et la joue inférieure 52. Le pied 15 est alors agencé dans ce volume 95 contrairement à l'attache 25 qui est agencée en dehors de ce volume 95. Le pied peut être agencé entre la joue supérieure 51 et la joue inférieure 52 à équidistance avec cette joue supérieure 51 et la joue inférieure 52.

De plus, l'arbre de liaison 20 traverse l'orifice de passage 65. Cet arbre de liaison 20 n'est alors en contact ni avec l'organe élastomérique 30 ni avec la deuxième armature 40, au moins au repos voire quelle que soit la position de la deuxième armature 40 par rapport à la première armature 10.

Éventuellement, l'arbre de liaison 20 peut comporter ou porter au moins un organe de butée 300 configuré pour limiter un mouvement de la deuxième armature 40 par rapport à la première armature 10 par interférence de forme. Par exemple, l'arbre de liaison porte un anneau 300. Cet anneau 300 peut entrer en contact avec la deuxième armature 40 lorsque la deuxième armature 40 effectue une rotation d'un angle prédéterminé par rapport à la première armature.

Par ailleurs, la deuxième armature 40 comprend au moins un deuxième orifice de fixation 53 destiné à être traversé par une deuxième tige et s'étendant selon un deuxième axe de fixation AX2. Par exemple, la joue supérieure 51 et la joue inférieure 52 comportent chacune au moins un deuxième orifice de fixation 53, un deuxième orifice de fixation 53 de la joue supérieure étant agencé au dessus d'un deuxième orifice de fixation 53 de la joue inférieure selon un deuxième axe de fixation AX2. Par exemple, le ou les deuxièmes axes de fixation AX2 sont parallèles au ou aux premier(s) axe(s) de fixation AX1. Selon l'exemple représenté, la joue supérieure 51 et la joue inférieure 52 comportent deux deuxièmes orifices de fixation 53 apte à être traversés par deux deuxièmes tiges.

Selon un autre aspect, la joue supérieure 51 et la joue inférieure 52 peuvent remplir aussi une fonction de manchon de pale, une pale étant attachée à cette joue supérieure 51 et à cette joue inférieure 52.

Eventuellement, chaque premier axe de fixation AX1 est configuré pour être plus près d'un axe de rotation AXROT d'un moyeu relié à l'attache 25 que le deuxième axe de fixation AX2.

En outre, la joue supérieure 51 et/ou la joue inférieure 52 peut comporter un renfoncement 200 pour éviter une interférence avec l'organe élastomérique 30.

Par ailleurs, la deuxième armature 40 peut comporter au moins un socle 43 qui porte un patin de butée 60. Par exemple, la joue supérieure 51 et la joue inférieure portent chacune un socle en forme de plaque. Les deux socles sont éventuellement coplanaires. Un patin de butée peut être vissé et/ou collé à chaque socle.

Une telle butée lamifiée peut être fabriquée en appliquant le procédé de l'invention.

Selon ce procédé, la première armature 15 et la deuxième armature 40 sont fabriquées par des méthodes usuelles.

La première armature 10 est alors disposée dans un moule. Les diverses coupelles sont agencées et maintenues dans le moule autour de la première armature, si nécessaire en positionnant au moins deux portions d'une coupelle l'une contre l'autre. Eventuellement les au moins deux portions d'une coupelle sont reliées par un lien. La deuxième armature est aussi disposée dans le moule.

Ce moule est ensuite fermé. Dès lors, le matériau élastique des couches principales est injecté dans le moule pour former les couches principales. Un cycle de chauffage et/ou de mise sous pression est de plus appliqué pour finaliser la butée lamifiée.

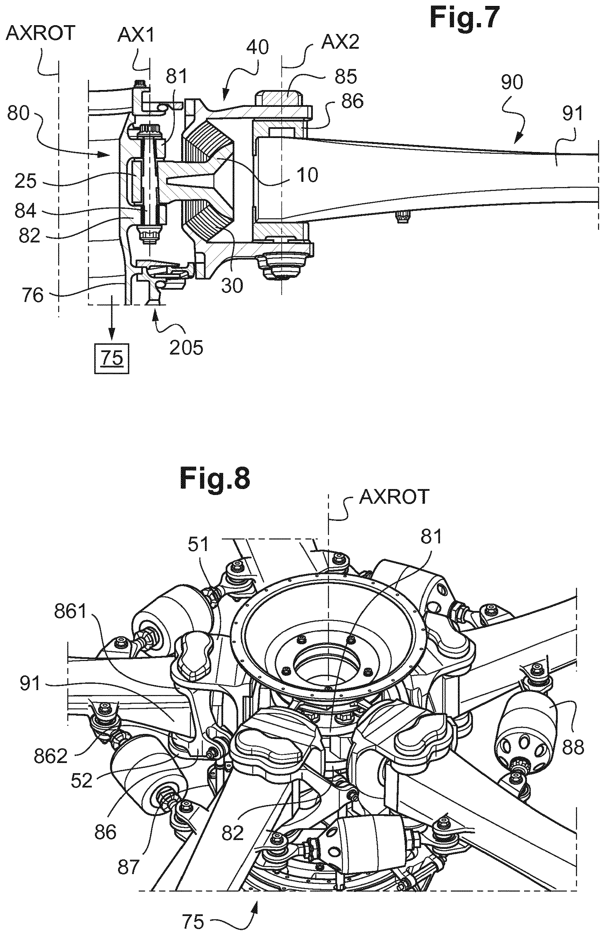

Les figures 7 et 8 illustrent un rotor 75 muni de butées lamifiées 1 selon l'invention.

Ce rotor 75 comporte un mât rotor 76 qui est mis en rotation autour de l'axe de rotation AXROT par une installation motrice 205. Ce mât rotor 76 porte un moyeu 80. Par exemple, le moyeu 80 inclut au moins deux épaulements 81, 82. Les au moins deux épaulements 81, 82 sont solidaires en rotation du mât rotor 76, voire sont intégrés à ce mât rotor.

Le moyeu peut comprendre deux épaulements 81, 82 par ensemble sustentateur 90.

Alternativement, deux mêmes épaulements peuvent permettre de fixer tous les ensembles sustentateurs. Chaque épaulement peut alors par exemple prendre la forme d'un anneau solidaire du mât rotor.

Dès lors, l'attache 25 d'une butée lamifiée 1 est attachée par au moins une première tige 84 au moyeu 80. Cette attache 25 est par exemple disposée verticalement entre les deux épaulements 81, 82 du moyeu 80. La deuxième armature est désolidarisée du moyeu, aucun organe élastomérique étant à la fois fixé à la deuxième armature et au moyeu. La butée lamifiée est uniquement fixée au moyeu par l'attache 25.

De plus, un ensemble sustentateur 90 est attaché par au moins une deuxième tige 85 à la deuxième armature 40 de la butée lamifiée 1. Selon l'exemple de la figure 7, une pale 91 de l'ensemble sustentateur est directement attachée à la deuxième armature. Selon un autre exemple, un manchon est attaché à la deuxième armature, la pale étant attachée au manchon.

Par ailleurs et en référence à la figure 8, une deuxième tige peut traverser une pale ou un manchon et une deuxième armature 40 mais peut aussi traverser une fourche 86 articulée à une bielle de pas 87. Une telle fourche peut avoir une forme en Y pour comporter deux branches 861, 862 disposées verticalement de part et d'autre d'une pale 91 ou d'un machaon de pale, la joue supérieure 51 et la joue inférieure 52 de la deuxième armature étant situées verticalement de part et d'autre des deux branches 861, 862. Cette structure comporte successivement en élévation la joue inférieure 52, une branche inférieure 862 de la fourche, une pale ou un manchon de pale, une branche supérieure 861 de la fourche et la joue supérieure 51.

Par ailleurs, le rotor peut comprendre des amortisseurs 88, chaque amortisseur 88 étant articulé à deux pales ou à deux manchons de pale.

Selon un autre aspect, le rotor peut comporter des organes usuels coopérant avec les patins de butée, tel qu'un anneau réciproque par exemple.

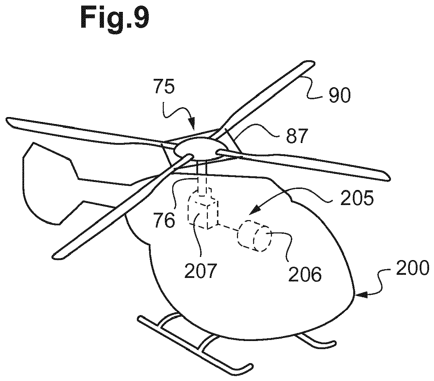

La figure 9 illustre de manière schématique un aéronef 200 muni d'un rotor 75 selon l'invention. Cet aéronef comprend une installation motrice 205 incluant au moins un moteur 206 pour entraîner le mât rotor 76, éventuellement via une boîte de transmission de puissance 207.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. La portée de l'invention est définie par les revendications annexées.

## Revendications

1. Butée lamifiée (1) munie d'une première armature (10) et d'une deuxième armature (40), la butée lamifiée (1) comprenant un organe élastomérique (30) reliant une première face (16) de la première armature (10) à une deuxième face (41) de la deuxième armature (40) en s'étendant selon un sens d'empilement (101), ledit organe élastomérique (30) comprenant un empilement de couches principales (31) et de couches secondaires (32), chaque couche principale (31) comportant au moins un matériau élastique et chaque couche secondaire (32) comportant au moins une coupelle (33) en un matériau rigide, ladite deuxième armature (40) comportant selon un sens d'extension (102) contraire au sens d'empilement (101) un premier tronçon (45) muni de la deuxième face (41) puis un deuxième tronçon (50) qui est destiné à être attaché à un ensemble sustentateur (90),
ladite première armature (10) étant une pièce monobloc d'un seul tenant et comprenant selon le sens d'empilement (101) un pied (15) muni de la première face (16) puis un arbre de liaison (20) suivi d'une attache (25) destinée à être attachée à un moyeu (80), ladite deuxième face (41) étant perforée par un orifice de passage (65) qui est traversé par la première armature (10), chaque couche principale (31) et chaque couche secondaire (32) présentant une ouverture (70) traversée par la première armature (10), le pied (15) étant agencé dans un volume (95) délimité par la deuxième armature (40) et l'attache (25) étant agencée en dehors dudit volume (95), au moins une coupelle (33) entourant une ouverture (70) ne pouvant pas être traversée par l'attache (25), cette coupelle (33) comportant au moins deux portions (331, 332) distinctes.

2. Butée lamifiée selon la revendication 1,
dans laquelle ledit organe élastomérique (30) est effilé selon le sens d'extension (102).

3. Butée lamifiée selon l'une quelconque des revendications 1 à 2,
dans laquelle ladite attache (25) comporte au moins un premier orifice de fixation (26) destiné à être traversé par une première tige (84) selon un premier axe de fixation (AX1), ladite deuxième armature (40) comprenant au moins un deuxième orifice de fixation (53) destiné à être traversé par une deuxième tige (85) selon un deuxième axe de fixation (AX2), le premier axe de fixation (AX1) étant configuré pour être plus près d'un axe de rotation (AXROT) d'un moyeu (80) relié à l'attache (25) que le deuxième axe de fixation (AX2).

4. Butée lamifiée selon l'une quelconque des revendications 1 à 3,
dans laquelle ledit arbre de liaison (20) est effilé selon ledit sens d'empilement (101).

5. Butée lamifiée selon l'une quelconque des revendications 1 à 4,
dans laquelle ledit arbre de liaison (20) n'est en contact ni avec l'organe élastomérique (30) ni avec la deuxième armature (40).

6. Butée lamifiée selon l'une quelconque des revendications 1 à 4,
dans laquelle l'arbre de liaison comporte ou porte au moins un organe de butée configuré pour limiter un mouvement de la deuxième armature par rapport à la première armature par interférence de forme.

7. Butée lamifiée selon l'une quelconque des revendications 1 à 6,
dans lequelle ladite deuxième armature (40) comporte au moins un socle (43), le socle (43) portant un patin de butée (60).

8. Butée lamifiée selon l'une quelconque des revendications 1 à 7,
dans laquelle ladite attache (25) s'étend verticalement sur une hauteur (H1) perpendiculairement au sens d'empilement (101), ladite attache (25) s'étend latéralement sur une largeur (L1) perpendiculairement au sens d'empilement (101), ladite ouverture (70) d'une coupelle (33) ne pouvant pas être traversée par l'attache (25) étant contenue dans un disque présentant un diamètre (D1), ledit diamètre (D1) est inférieur à ladite hauteur (H1), ledit diamètre (D1) est inférieur à ladite largeur (L1).

9. Butée lamifiée selon l'une quelconque des revendications 1 à 8,
dans laquelle lesdits au moins deux portions (331, 332) sont emboitées l'une dans l'autre.

10. Butée lamifiée selon l'une quelconque des revendications 1 à 9,
dans laquelle lesdits au moins deux portions (331, 332) comportent respectivement au moins deux oreilles (334, 335), lesdites deux oreilles (334, 335) étant reliées par un lien (336).

11. Butée lamifiée selon l'une quelconque des revendications 1 à 10,
dans laquelle ledit orifice de passage (65) présente une surface (66) pouvant être traversée par le pied (15) ainsi que par l'arbre de liaison (20) et l'attache (25).

12. Butée lamifiée selon l'une quelconque des revendications 1 à 11,
dans laquelle ladite attache (25) et ladite première face (16) sont en saillie de l'arbre de liaison (20) au moins selon une direction perpendiculaire au sens d'empilement (101).

13. Rotor (75) muni d'un moyeu (80) et de plusieurs ensembles sustentateurs (90), chaque ensemble sustentateur (90) étant articulé au moyeu (80) par au moins une butée lamifiée (1),
ladite au moins une butée lamifiée (1) étant selon l'une quelconque des revendications 1 à 12.

14. Rotor selon la revendication 13,
dans lequel ledit moyeu (80) inclut au moins deux épaulements (81, 82), lesdits au moins deux épaulements (81, 82) étant solidaires d'un mât rotor (76), au moins une dite butée lamifiée (1) étant agencée entre lesdits au moins deux épaulements (81, 82) et étant attachée à ces dites au moins deux épaulements (81, 82).

15. Aéronef (200) muni d'un rotor (75),
dans lequel ledit rotor (75) est selon l'une quelconque des revendications 13 à 14.

16. Procédé de fabrication d'une butée lamifiée selon l'une quelconque des revendications 1 à 12, ledit procédé comportant les étapes suivantes :
- placement dans un moule des couches secondaires (32) autour de la première armature (10), deux portions (331, 332) d'au moins une coupelle (33) étant positionnées l'un contre l'autre, et placement dans le moule de la deuxième armature,
- injection du matériau élastique des couches principales dans le moule.

## Patentansprüche

1. Laminierter Anschlag (1) mit einer ersten Bewehrung (10) und einer zweiten Bewehrung (40), wobei der laminierte Anschlag (1) ein elastomeres Element (30) umfasst, das eine erste Fläche (16) der ersten Bewehrung (10) mit einer zweiten Fläche (41) der zweiten Bewehrung (40) verbindet und sich in einer Stapelrichtung (101) erstreckt, wobei das elastomere Element (30) einen Stapel von Hauptschichten (31) und Sekundärschichten (32) umfasst, wobei jede Hauptschicht (31) mindestens ein elastisches Material umfasst und jede Sekundärschicht (32) mindestens einen Napf (33) aus einem starren Material umfasst, wobei die zweite Bewehrung (40) in einer zur Stapelrichtung (101) entgegengesetzten Erstreckungsrichtung (102) einen ersten Abschnitt (45), der mit der zweiten Fläche (41) versehen ist, und anschließend einen zweiten Abschnitt (50) umfasst, der vorgesehen ist, um an einer Auftriebsbaugruppe (90) befestigt zu werden,
wobei die erste Bewehrung(10) ein einteiliges Teil ist und in Stapelrichtung (101) einen Fuß (15), der mit der ersten Fläche (16) versehen ist, dann eine Verbindungswelle (20), gefolgt von einem Befestigungselement (25), das dazu bestimmt ist, an einer Nabe (80) befestigt zu werden, aufweist, wobei die zweite Fläche (41) von einem Durchgangsloch (65) durchbrochen ist, durch das sich die erste Bewehrung (10) erstreckt, jede Hauptschicht (31) und jede Sekundärschicht (32) eine Öffnung (70) aufweist, durch die sich die erste Bewehrung (10) hindurch erstreckt, der Fuß (15) in einem durch die zweite Bewehrung (40) begrenzten Volumen (95) angeordnet ist und das Befestigungselement (25) außerhalb des besagten Volumens (95) angeordnet ist, mindestens ein Napf (33) eine Öffnung (70) umgibt, durch die das Befestigungselement (25) nicht hindurchpasst, wobei dieser Napf (33) mindestens zwei getrennte Abschnitte (331, 332) aufweist.

2. Laminierter Anschlag nach Anspruch 1,
bei dem das elastomere Element (30) in der Erstreckungsrichtung (102) verjüngt ist.

3. Laminierter Anschlag nach einem der Ansprüche 1 bis 2,
bei dem das Verbindungselement (25) mindestens eine erste Befestigungsöffnung (26) aufweist, die dazu bestimmt ist, von einer ersten Stange (84) entlang einer ersten Befestigungsachse (AX1) durchquert zu werden, wobei die zweite Bewehrung (40) mindestens eine zweite Befestigungsöffnung (53) aufweist, die dazu bestimmt ist, von einer zweiten Stange (85) entlang einer zweiten Befestigungsachse (AX2) durchquert zu werden, und die erste Befestigungsachse (AX1) so konfiguriert ist, dass sie näher an einer Drehachse (AXROT) einer mit der Befestigung (25) verbundenen Nabe (80) liegt als die zweite Befestigungsachse (AX2).

4. Laminierter Anschlag nach einem der Ansprüche 1 bis 3,
bei dem die Verbindungswelle (20) in der Stapelrichtung (101) verjüngt ist.

5. Laminierter Anschlag nach einem der Ansprüche 1 bis 4,
bei dem die Verbindungswelle (20) weder mit dem elastomeren Element (30) noch mit der zweiten Bewehrung (40) in Kontakt ist.

6. Laminierter Anschlag nach einem der Ansprüche 1 bis 4,
bei dem die Verbindungswelle mindestens ein Anschlagelement umfasst oder trägt, das konfiguriert ist, um eine Bewegung der zweiten Bewehrung relativ zu der ersten Bewehrung durch Formschluss zu begrenzen.

7. Laminierter Anschlag nach einem der Ansprüche 1 bis 6,
bei dem die zweite Bewehrung (40) mindestens eine Basis (43) aufweist, wobei die Basis (43) ein Anschlagpolster (60) trägt.

8. Laminierter Anschlag nach einem der Ansprüche 1 bis 7,
bei dem sich das Befestigungselement (25) senkrecht zur Stapelrichtung (101) vertikal über eine Höhe (H1) erstreckt, das Befestigungselement (25) sich senkrecht zur Stapelrichtung (101) seitlich über eine Breite (L1) erstreckt, wobei die Öffnung (70) eines Napfes (33), durch die sich das Befestigungselement (25) nicht erstrecken kann, in einer Scheibe mit einem Durchmesser (D1) enthalten ist, wobei der Durchmesser (D1) kleiner ist als die Höhe (H1) ist und der Durchmesser (D1) kleiner ist als die Breite (L1).

9. Laminierter Anschlag nach einem der Ansprüche 1 bis 8,
bei dem die mindestens zwei Abschnitte (331, 332) ineinander gesteckt sind.

10. Laminierter Anschlag nach einem der Ansprüche 1 bis 9,
bei dem die mindestens zwei Abschnitte (331, 332) jeweils mindestens zwei Laschen (334, 335) umfassen, wobei die beiden Laschen (334, 335) durch ein Verbindungsglied (336) verbunden sind.

11. Laminierter Anschlag nach einem der Ansprüche 1 bis 10,
bei dem das Durchgangsloch (65) eine Fläche (66) aufweist, durch die sowohl der Fuß (15) als auch die Verbindungswelle (20) und die Verbindung (25) hindurchpassen.

12. Laminierter Anschlag nach einem der Ansprüche 1 bis 11,
bei dem das Befestigungselement (25) und die erste Fläche (16) mindestens in einer zur Stapelrichtung (101) senkrechten Richtung von der Verbindungswelle (20) abstehen.

13. Rotor (75) mit einer Nabe (80) und mehreren Auftriebsbaugruppen (90), bei dem jede Auftriebsbaugruppe (90) durch mindestens einen laminierten Anschlag (1) an der Nabe (80) angelenkt ist und der mindestens eine laminierte Anschlag (1) nach einem der Ansprüche 1 bis 12 ausgebildet ist.

14. Rotor nach Anspruch 13,
bei dem die Nabe (80) mindestens zwei Schultern (81, 82) aufweist, wobei die mindestens zwei Schultern (81, 82) fest mit einem Rotormast (76) verbunden sind, wobei mindestens ein laminierter Anschlag (1) zwischen den mindestens zwei Schultern (81, 82) angeordnet und an den mindestens zwei Schultern (81, 82) befestigt ist.

15. Luftfahrzeug (200) mit einem Rotor (75),
wobei der Rotor (75) nach einem der Ansprüche 13 bis 14 ausgeführt ist.

16. Verfahren zur Herstellung eines laminierten Anschlags nach einem der Ansprüche 1 bis 12,
wobei das Verfahren die folgenden Schritte umfasst:
- Anordnen der Sekundärschichten (32) um die erste Bewehrung (10) in einer Form, wobei zwei Abschnitte (331, 332) mindestens eines Napfes (33) gegeneinander positioniert sind, und Anordnen der zweiten Bewehrung in der Form,
- Einspritzen des elastischen Materials der Hauptschichten in die Form.

## Claims

1. Laminated abutment (1) provided with a first armature (10) and a second armature (40), the laminated abutment (1) comprising an elastomeric member (30) connecting a first face (16) of the first armature (10) to a second face (41) of the second armature (40) by extending in a stacking direction (101), said elastomeric member (30) comprising a stack of main layers (31) and secondary layers (32), each main layer (31) comprising at least one elastic material and each secondary layer (32) comprising at least one cup (33) in a rigid material, said second armature (40) having in an extension direction (102) opposite to the stacking direction (101) a first section (45) provided with the second face (41) then a second section (50) which is intended to be attached to a lift assembly (90), said first armature (10) being a one-piece integral part and comprising in the stacking direction (101) a foot (15) provided with the first face (16) then a connecting shaft (20) followed by a fastener (25) intended to be attached to a hub (80), said second face (41) being perforated by a through hole (65) which is traversed by the first armature (10), each main layer (31) and each secondary layer (32) having an opening (70) traversed by the first armature (10), the foot (15) being arranged in a space (95) delimited by the second armature (40) and the fastener (25) being arranged outside said space (95), at least one cup (33) surrounding an opening (70) that cannot be traversed by the fastener (25), this cup (33) comprising at least two distinct portions (331, 332).

2. Laminated abutment according to claim 1, wherein said elastomeric member (30) is tapered in the extension direction (102).

3. Laminated abutment according either of claims 1 or 2, wherein said fastener (25) comprises at least a first fixing hole (26) intended to be traversed by a first rod (84) according to a first fastening axis (AX1), said second armature (40) comprising at least a second fastening hole (53) intended to be traversed by a second rod (85) according to a second fastening axis (AX2), the first fastening axis (AX1) being configured to be closer to an axis of rotation (AXROT) of a hub (80) connected to the fastener (25) than the second attachment axis (AX2).

4. Laminated abutment according to any one of claims 1 to 3, wherein said connecting shaft (20) is tapered in said stacking direction (101).

5. Laminated abutment according to any one of claims 1 to 4, wherein said connecting shaft (20) is in contact neither with the elastomeric member (30) nor with the second armature (40).

6. Laminated abutment according to any one of claims 1 to 4, wherein the connecting shaft comprises or carries at least one abutment member configured to limit a movement of the second armature relative to the first armature by interference of form.

7. Laminated abutment according to any one of claims 1 to 6, wherein said second armature (40) comprises at least one base (43), the base (43) carrying an abutment pad (60).

8. Laminated abutment according to any one of claims 1 to 7, wherein said fastener (25) extends vertically over a height (H1) perpendicular to the stacking direction (101), said fastener (25) extends laterally over a width (L1) perpendicular to the direction of stacking (101), said opening (70) of a cup (33) being unable to be traversed by the fastener (25) being contained in a disc having a diameter (D1), said diameter (D1) is less than said height (H1), and said diameter (D1) is smaller than said width (L1).

9. Laminated abutment according to any one of claims 1 to 8, wherein said at least two portions (331, 332) are nested one inside the other.

10. Laminated abutment according to any one of claims 1 to 9, wherein said at least two portions (331, 332) respectively comprise at least two lugs (334, 335), said two lugs (334, 335) being connected by a link (336).

11. Laminated abutment according to any one of claims 1 to 10, wherein said though hole (65) has a surface (66) through which the foot (15) and the connecting shaft (20) and the fastener (25) can pass.

12. Laminated abutment according to any one of claims 1 to 11, wherein said fastener (25) and said first face (16) project from the connecting shaft (20) at least in a direction perpendicular to the stacking direction (101).

13. Rotor (75) having a hub (80) and several lift assemblies (90), each lift assembly (90) being hinged to the hub (80) by at least one laminated abutment (1), said at least one laminated abutment (1) being according to any one of claims 1 to 12.

14. Rotor according to claim 13, wherein said hub (80) includes at least two shoulders (81, 82), said at least two shoulders (81, 82) being integral with a rotor mast (76), at least one said laminated abutment (1) being arranged between said at least two shoulders (81, 82) and being attached to these said at least two shoulders (81, 82) .

15. Aircraft (200) provided with a rotor (75), wherein said rotor (75) is according to any one of claims 13 to 14.

16. Method of manufacturing a laminated abutment according to any one of claims 1 to 12, said method comprising the following steps:
- placing in a mould the secondary layers (32) around the first armature (10), two portions (331, 332) of at least one cup (33) being positioned against each other, and placing in the mould of the second armature,
- injection of the elastic material of the main layers into the mould.
